Europäisches Patentamt

European Patent Office

Office européen des brevets

(19)

(11) Numéro de publication : **0 047 192**
**B1**

(12) **FASCICULE DE BREVET EUROPÉEN**

(45) Date de publication du fascicule du brevet :
24.04.85

(51) Int. Cl.⁴ : **G 01 K 13/02**

(21) Numéro de dépôt : **81401161.5**

(22) Date de dépôt : **22.07.81**

(54) **Système de mesure d'une grandeur d'état d'un fluide.**

(30) Priorité : **28.08.80 FR 8018638**

(43) Date de publication de la demande :
**10.03.82 Bulletin 82/10**

(45) Mention de la délivrance du brevet :
**24.04.85 Bulletin 85/17**

(84) Etats contractants désignés :
**DE FR GB**

(56) Documents cités :
**DE-A- 1 648 280**
**DE-C- 1 287 332**
**FR-A- 2 436 375**
**US-A- 2 496 806**
**US-A- 3 417 617**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Mouton, Pierre Charles**
**19, Rue de la Mare aux Moines**
**F-91350 Grigny (FR)**

(74) Mandataire : **Molnat, François et al**
**S.N.E.C.M.A. Service des Brevets Boîte Postale 81**
**F-91003 Evry Cedex (FR)**

## 0 047 192

**Description**

La présente invention concerne un système de mesure d'une grandeur d'état d'un fluide, du type comportant un dispositif de sonde de mesure situé à distance du fluide sur lequel doit porter la mesure et placé dans un circuit de prélèvement avec écoulement, ledit fluide étant affecté au point de mesure, du fait de son transport à distance, d'une certaine erreur de ladite grandeur d'état par rapport à celle dudit fluide sur laquelle doit porter la mesure, et comportant en outre deux dispositifs de sonde correctrice, placés dans ledit circuit de prélèvement à des positions différentes, et un premier et un deuxième moyens de calcul.

La mesure de la température des gaz à la sortie des chambres de combustion de réacteurs d'avion, par exemple, est généralement réalisée au moyen de capteurs à thermocouple disposés dans la veine de gaz, généralement entre roues de turbine haute pression et basse pression ; l'écoulement intense des gaz autour des capteurs produit un échauffement et une mise en température quasi instantanée des capteurs, et l'on obtient ainsi une mesure assez fidèle de la température. Toutefois, les capteurs, ou jonctions, ou soudures à thermocouple utilisés sont nécessairement fins et fragiles et, dans un environnement aussi sévère, ils ont une durée de vie limitée notamment du fait des vibrations, brûlures, etc... qu'ils subissent.

Pour remédier à cet inconvénient, on a proposé pour cette utilisation dans le document FR-A-2 436 375 de loger ces capteurs à l'intérieur d'aubes fixes des distributeurs de turbine et de leur faire mesurer la température d'un échantillon de gaz prélevé dans la veine à travers l'aube.

Néanmoins, le prélèvement modifie la température du gaz admis autour de la sonde : la température relevée par la sonde est entachée d'une erreur positive ou négative ; or, il est généralement important que le pilote soit informé, avec exactitude de la température du gaz.

DE-A-1 648 280, contenant toutes les caractéristiques contenues dans le préambule de la présente revendication 1, décrit un dispositif de mesure de la température d'un gaz comportant un thermocouple principal placé au contact du gaz en circulation et plusieurs thermocouples auxiliaires disposés dans une enceinte coaxiale, ces thermocouples étant reliés à un moyen de calcul donnant la différence entre la valeur de la mesure donnée par le thermocouple principal et la valeur moyenne des mesures données par les thermocouples auxiliaires. Cette différence est introduite comme valeur corrective dans un indicateur relié au thermocouple principal.

DE-C-1 287 332 décrit un dispositif de mesure des hautes températures d'un fluide comportant une sonde de mesure et une sonde correctrice dont les signaux sont soustraits. Un logement est prévu pour la sonde de mesure qui est ainsi retirée de la circulation directe du fluide.

Toutefois ces dispositifs connus ne donnent pas entière satisfaction pour une mesure instantanée et précise de la température des gaz dans l'utilisation visée par l'invention, en particulier à l'entrée de turbine d'un réacteur d'avion.

L'invention remédie à ces inconvénients et a notamment pour but de proposer un système permettant de s'affranchir de cette erreur liée au prélèvement du gaz et d'obtenir une lecture aussi juste que possible de la température réelle des gaz.

Ce but est atteint dans un système de mesure décrit dans le préambule de la revendication 1 conformément à l'invention, du fait que l'un des dispositifs de sonde correctrice mesure ladite grandeur d'état sensiblement avec la même valeur d'erreur que le dispositif de sonde de mesure, l'autre mesurant cette grandeur d'état avec une valeur d'erreur double et que le premier moyen de calcul fournit la différence $\Delta T$ entre les signaux $T_2$, $T_3$ fournis par les dispositifs de sonde correctrice, et le deuxième moyen de calcul fournit le signal $T = T_1 - \Delta T$ où $T_1$ est le signal fourni par le dispositif de sonde de mesure.

Les modes particuliers de réalisation de cette invention sont définis dans les revendications 2 à 6.

Avantageusement, des dispositifs de sonde de mesure et de sonde correctrice comprennent chacun un capteur de température placé dans un écoulement de gaz prélevé à partir du gaz à mesurer à l'aide de moyens de prélèvement non adiabatiques. L'efficacité d'échange thermique $K_2$ du circuit de prélèvement de l'un des dispositifs de sonde correctrice est double de celle $K_1$ du circuit de prélèvement du dispositif de sonde de mesure, tandis que l'efficacité d'échange $K_3$ du circuit de prélèvement de l'autre dispositif de sonde correctrice est égale à celle, $K_1$, du circuit de prélèvement du dispositif de sonde de mesure.

Avantageusement, les capteurs des trois sondes sont du type à thermocouple.

Avantageusement, les capteurs des trois sondes sont des soudures de thermocouple identiques, montées en opposition chacune avec sa voisine.

Ce système de mesure permet ainsi de compenser les erreurs de mesure de capteurs de température à mesure indirecte par prélèvement en régime transitoire et permanent, et il est avantageusement appliqué à la mesure de la température des gaz sortant des chambres de combustion d'une turbomachine.

Les caractéristiques et avantages de l'invention seront mieux compris à la lecture de la description qui va suivre de plusieurs modes de réalisation de l'invention, description faite en référence aux dessins annexés dans lesquels :

la figure 1 est un schéma d'un thermocouple classique ;

la figure 2 est une vue schématique en coupe d'une aube de distributeur de turbine munie d'une canalisation de prélèvement et d'un capteur de température ;

la figure 3 est un schéma d'un circuit de thermocouples selon un premier mode de réalisation de l'invention ;

la figure 4 est un schéma explicatif et fonctionnel d'un système de sondes de température selon ce premier mode de réalisation de l'invention ;

les figures 5A et 5B sont des schémas de circuit électrique de thermocouple selon d'autres modes de réalisation ;

la figure 6 est une vue schématique en coupe d'un système de sondes de température selon le premier mode de réalisation de l'invention ;

la figure 7 est un diagramme en fonction du temps, de la réponse des différents capteurs du système selon l'invention.

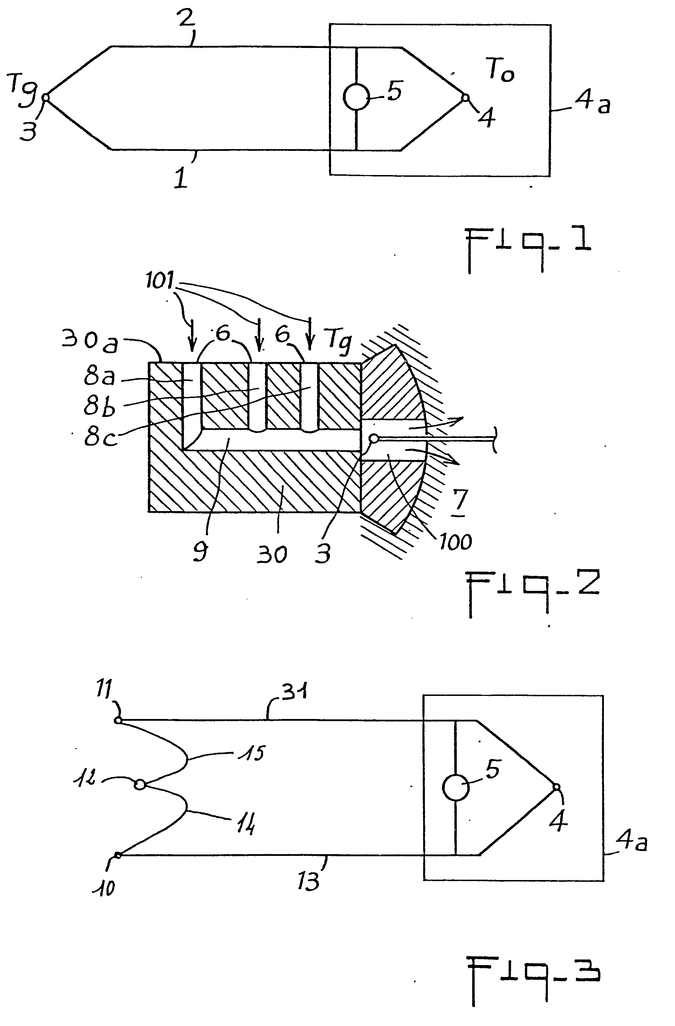

Le thermocouple représenté à la figure 1 est composé de deux conducteurs 1 et 2 respectivement, en chromel et en alumel par exemple, mutuellement soudés à leurs deux extrémités. Une extrémité, dite soudure de mesure ou soudure chaude, 3 est exposée à la température à mesurer Tg ; l'autre extrémité, dite soudure froide, 4 est maintenue à une température de référence $T_0$ régnant dans une enceinte 4a ; un voltmètre 5 indique la différence de potentiel entre les deux conducteurs 1, 2 ; cette différence de potentiel est représentative de la température à mesurer Tg.

Dans le cas où la soudure de mesure 3 est placée en contact avec les gaz prélevés à travers une aube fixe 30 du distributeur de turbine (figure 2), la température $T_1$ lue par cette sonde est entachée d'une erreur ΔT due aux échanges de chaleur qui se produisent dans l'aube porteuse 30 dans le prélèvement alimentant la soudure entre les gaz initialement à la température Tg et les parois de l'aube 30.

Pour éviter de placer la soudure 3 à l'intérieur de la turbine, on prélève les gaz par plusieurs trous 6 percés dans le bord d'attaque 30a d'une aube 30, ou d'une série d'aubes réparties circonférentiellement sur la roue distributrice de la turbine, et l'on place la soudure 3 en tête de l'aube 30 dans le courant de gaz 100 ainsi prélevé dans la veine 101 ; les gaz sont ensuite évacués directement dans l'atmosphère 7.

La soudure 3 « voit » ainsi une température moyenne de plusieurs niveaux radiaux de la veine ; mais les gaz, en circulant dans les canaux 8a, 8b, 8c et dans le canal central 9 de l'aube 30 échangent des calories avec les parois de ces canaux et la température « vue » par la soudure est donc entachée d'une erreur ΔT. On peut définir l'efficacité K d'échange thermique entre la canalisation de prélèvement et le gaz par la formule $K = (Tg - T_1)/(Tg - Tm)$ où Tm est la température moyenne des parois de la canalisation de prélèvement, laquelle est généralement entachée d'une erreur permanente liée au refroidissement de l'aube par son support. La température $T_1$ mesurée par la sonde de mesure peut s'écrire :

$$T_1 = Tg + K (Tm - Tg)$$

d'où $ΔT = K (Tm - Tg)$.

On cherche à compenser cette erreur ΔT de la façon suivante.

Puisque l'erreur ΔT correspond à la variation de température des gaz prélevés à travers l'aube 30, une mesure de ΔT pourra être obtenue en générant, de la même façon que ΔT, une variation de température 2 ΔT et en mesurant la différence :

$$(Tg + 2 ΔT) - (Tg + ΔT) = ΔT,$$

qui est l'erreur parasite.

Selon un premier mode de réalisation, pour retrancher (Tg + ΔT) de (Tg + 2 ΔT), il suffit de disposer deux thermocouples correcteurs mesurant ces températures en opposition mutuelle selon le schéma de la figure 3.

Sur la figure 3, on a désigné la soudure froide, l'enceinte où règne la température de référence $T_0$ et le voltmètre de mesure du thermocouple, par les mêmes références que sur la figure 1. Le dispositif de la figure 3 comporte trois soudures : une soudure de mesure 10 exposée, comme la soudure 3 de la figure 2, à la température $T_1$ des gaz sortant du canal 9 et deux soudures correctrices 11 et 12 montées mutuellement en opposition, dont l'une 11 est exposée à une température $T_3$ égale à celle à laquelle est exposée la soudure 10, les deux circuits de prélèvement étant identiques, tandis que l'autre soudure correctrice 12 est exposée à une température $T_2$ de gaz prélevés dans une canalisation de prélèvement analogue à la canalisation 8a à 8c et 9 mais présentant une efficacité K2 d'échange thermique avec le gaz de prélèvement, double de celui de ladite canalisation 8a à 8c et 9. On peut régler le rapport entre les efficacités K des différents circuits de prélèvement par action sur la géométrie (diamètre et longueur) des canaux de prélèvement.

Selon l'exemple de la figure 3, la soudure de mesure 10 est la jonction — ou soudure — entre, d'une part, un conducteur en alumel 13 reliant la soudure froide 4 à cette soudure 10, et, d'autre part, un conducteur en chromel 14 reliant la soudure 10 à la soudure correctrice 12.

La soudure correctrice 12 est la jonction entre d'une part ce conducteur en chromel 14, et d'autre part un conducteur en alumel 15 reliant la soudure 12 à la soudure 11 ; la soudure correctrice 11 est la jonction entre, d'une part ce conducteur en alumel 15 et d'autre part un conducteur en chromel 31 reliant la soudure 11 à la soudure froide 4.

3

Ainsi, le voltmètre 5 reçoit une tension représentative de la température

$$T_1 - (T_2 - T_3) = T_1 - T_2 + T_3 = (Tg + \Delta T) - (Tg + 2\Delta T) + (Tg + \Delta T) = Tg$$

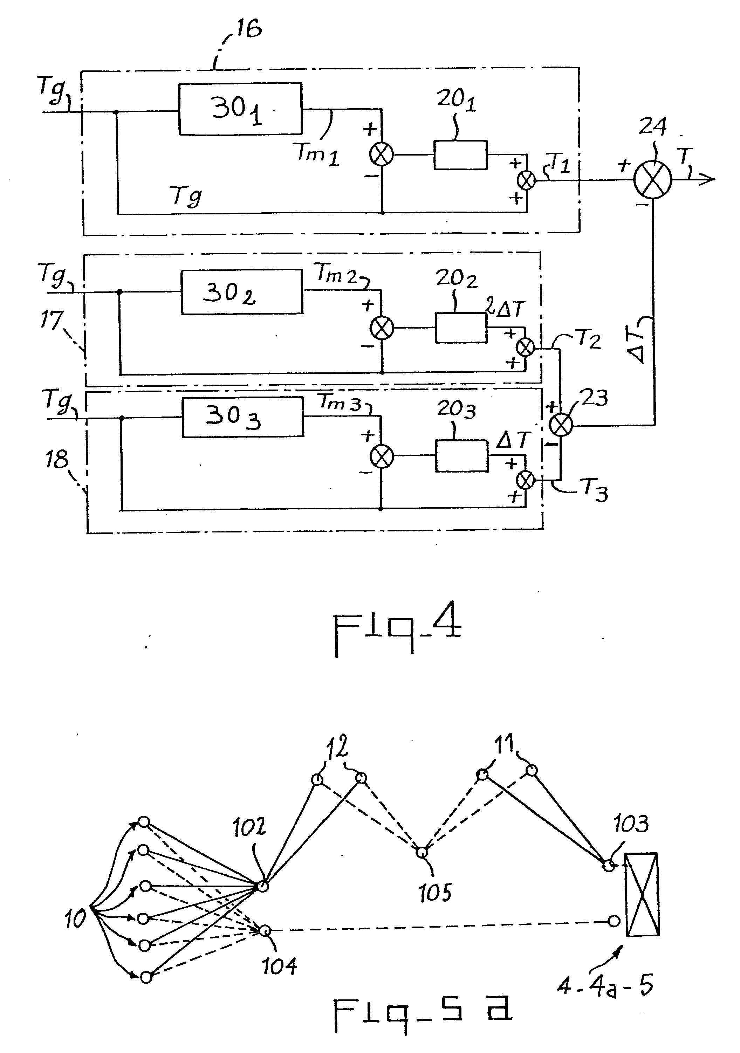

La figure 4 montre schématiquement le fonctionnement de ce premier mode de réalisation du système de mesure de la température de gaz Tg, permettant d'obtenir la compensation recherchée.

Selon ce mode de réalisation, le système comprend trois dispositifs de mesure de la température de gaz Tg :

1. un premier dispositif 16 dans lequel la fonction $T_1 = Tg + K_1 (Tm_1 - Tg)$ est réalisée,
   $30_1$ correspondant à l'aube 30 de la figure 2, portée à la température $Tm_1$,
   $20_1$ correspondant à l'échangeur gaz/aube dont l'efficacité d'échange est $K_1$,
   l'ensemble 16 correspondant à la soudure 10 de la figure 3 ;
2. un deuxième dispositif 17 dans lequel la fonction $T_2 = Tg + K_2 (Tm_2 - Tg)$ est réalisée,
   $30_2$ correspondant à l'aube 30 de la figure 2, portée à la température $Tm_2 = Tm_1$,
   $20_2$ correspondant à l'échangeur gaz/aube dont l'efficacité d'échange est $K_2 = 2K_1$,
   l'ensemble 17 correspondant à la soudure 12 de la figure 3 ;
3. un troisième dispositif 18 dans lequel la fonction $T_3 = Tg + K_3 (Tm_3 - Tg)$ est réalisée,
   $30_3$ correspondant à l'aube 30 de la figure 2 portée à la température $Tm_3 = Tm_1$,
   $20_3$ correspondant à l'échangeur gaz/aube dont l'efficacité d'échange est $K_3 = K_1$,
   l'ensemble 18 correspondant à la soudure 11 de la figure 3.

Un premier moyen soustracteur 23 représente le montage en opposition des soudures 11 et 12 de la figure 3 et réalise la mesure $\Delta T = T_2 - T_3$.

Un second moyen soustracteur 24 représente le montage en opposition des soudures 10 et 12 de la figure 3 et réalise la mesure $T = T_1 - \Delta T = Tg$.

Le même résultat pourrait être obtenu par d'autres moyens utilisant d'autres capteurs de température que des thermocouples et d'autres moyens soustracteurs que ceux utilisés dans la figure 3 sans sortir du domaine de l'invention.

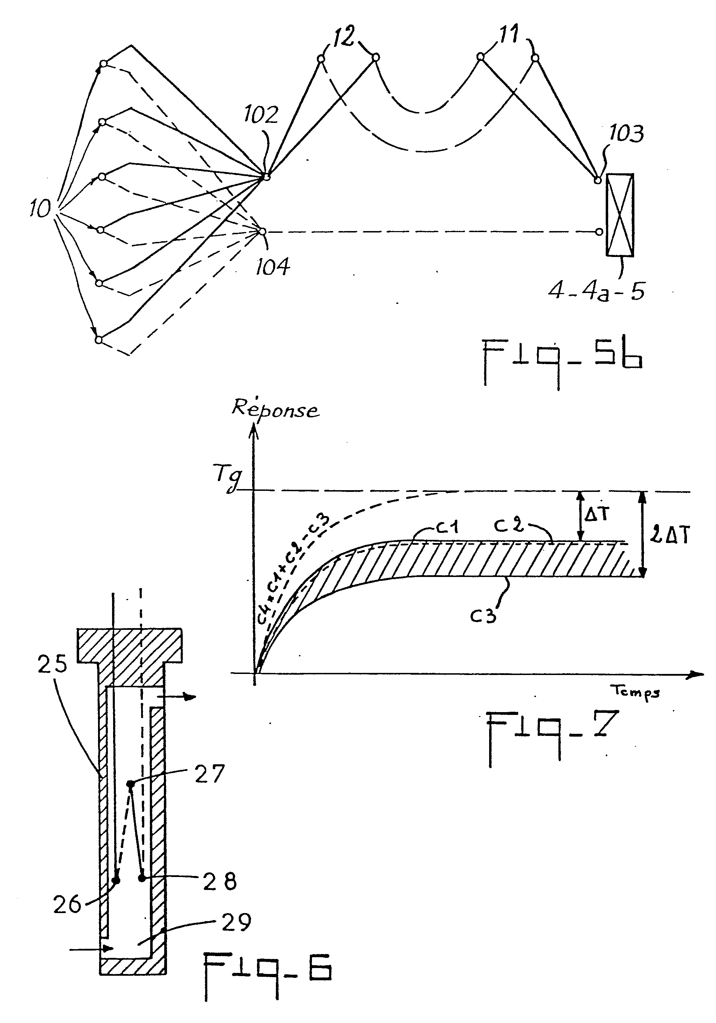

Dans d'autres modes de réalisation, afin d'augmenter la fiabilité du circuit de thermocouples, on peut préférer utiliser un circuit tel que ceux des figures 5a-5b qui comportent un plus grand nombre de soudures, par exemple six soudures de mesure 10, deux soudures correctrices 11 et deux soudures correctrices 12 ; ces dix soudures sont réparties circonférentiellement dans le distributeur de turbine et peuvent être cablées par exemple comme représenté sur la figure 5b. Les conducteurs en trait interrompu sont en chromel et ceux représentés en trait continu en alumel.

On remarque sur les deux figures 5a et 5b que les soudures de mesure 10 sont toutes branchées en parallèle entre deux points — ou nœuds — 102 et 104.

Sur la figure 5a, les soudures correctrices 11 sont également branchées en parallèle entre deux nœuds 103 et 105 et les soudures correctrices 12, de même, entre les nœuds 102 et 105, de telle sorte que le groupe des soudures correctrices 12 soit en opposition avec d'un côté le groupe des soudures de mesure 10 et de l'autre le groupe des soudures correctrices 11.

La figure 5b, est une variante du montage précédent dans laquelle les soudures correctrices 11 et 12 sont associées une à une en opposition, ces associations étant branchées en parallèle entre les deux nœuds 102 et 103, de telle sorte que les soudures 12 sont toujours en opposition avec les soudures 10 d'un côté et 11 de l'autre.

Le principe de compensation décrit ci-dessus permet donc d'élaborer un système particulièrement bien adapté à la compensation des erreurs affectant les capteurs de température par prélèvement, des turbomachines en régime permanent et cela sans nécessiter la mesure de la valeur absolue de l'erreur, mais seulement son rapport avec un système ayant une valeur d'erreur double, élaboré à partir des mêmes phénomènes physiques. Une variante représentée sur la figure 6 permet en outre de s'affranchir de la nécessité de recourir à des aubes supplémentaires pour y loger les soudures de compensation 11, 12.

Selon cette variante, on groupe dans un même corps de sonde 25, trois soudures 26 à 28 agencées comme celles (10 à 12) du système précédent ; ici la soudure 27 est affectée d'une efficacité d'échange double de celle des deux autres 26 et 28.

Comme sur la figure 3, la soudure 28 est montée en opposition par rapport à la soudure 27 qui est elle-même montée en opposition par rapport à la soudure 26. Le rapport entre les efficacités d'échanges thermiques de la soudure 27 et des deux soudures 26 et 28 est ici rendu égal à 2 grâce par exemple à l'enfoncement relatif plus ou moins grand de ces soudures dans le canal 29 à travers lequel le gaz prélevé traverse la sonde 25. La figure 7 montre schématiquement l'évolution dans le temps de la réponse des soudures 10 à 12.

Les courbes $C_1$ et $C_2$ qui correspondent, respectivement, aux soudures 10 et 11, ont une erreur $\Delta T$ par rapport à la température Tg des gaz.

La courbe $C_3$ qui correspond à la soudure 12 a une valeur d'erreur double $2\Delta T$ par rapport à Tg.

Puisque la soudure 12 est montée en opposition par rapport aux deux autres soudures, les erreurs des courbes $C_1$, $C_2$ et $C_3$ s'ajoutent algébriquement et se compensent.

On obtient sur le voltmètre 5 un signal de sortie évoluant selon la courbe $C_4$, réalisant ainsi une

**0 047 192**

mesure dont l'erreur est nulle par simple adaptation des circuits de prélèvement du gaz alimentant les soudures des thermocouples.

**Revendications**

1. Système de mesure d'une grandeur d'état (T) d'un fluide, du type comportant un dispositif de sonde de mesure (16 ; 10) situé à distance du fluide sur lequel doit porter la mesure et placé dans un circuit de prélèvement avec écoulement, ledit fluide étant affecté au point de mesure, du fait de son transport à distance, d'une certaine erreur de ladite grandeur d'état par rapport à celle dudit fluide sur laquelle doit porter la mesure, et comportant en outre deux dispositifs de sonde correctrice (17, 18 ; 12, 11), placés dans ledit circuit de prélèvement à des positions différentes, et un premier et un deuxième moyen de calcul (23 ; 24), caractérisé en ce que l'un des dispositifs de sonde correctrice (18 ; 11) mesure ladite grandeur d'état sensiblement avec la même valeur d'erreur que le dispositif de la sonde de mesure, l'autre (17 ; 12) mesurant cette grandeur d'état avec une valeur d'erreur double ; en ce que le premier moyen de calcul (23) fournit la différence $\Delta T$ entre les signaux $(T_2, T_3)$ fournis par les dispositifs de sonde correctrice (17, 18 ; 12, 11), et que le deuxième moyen de calcul (24) fournit le signal $T = T_1 - \Delta T$ où $T_1$ est le signal fourni par le dispositif de sonde de mesure (16 ; 10).

2. Système de mesure de la température d'un gaz selon la revendication 1, caractérisé en ce que les dispositifs de sonde de mesure (16) et de sonde correctrice (17, 18) comprennent chacun un capteur de température placé dans un écoulement de gaz (100) prélevé à partir du gaz à mesurer (101) à l'aide de moyens de prélèvement non adiabatiques (8a, 8b, 8c, 9) et en ce que l'efficacité d'échange thermique (K2) du circuit de prélèvement de l'un des dispositifs de sonde correctrice (17) est double de celle (K1) du circuit de prélèvement du dispositif de sonde de mesure (16), tandis que l'efficacité d'échange (K3) du circuit de prélèvement de l'autre dispositif de sonde correctrice (18) est égale à celle (K1) du circuit de prélèvement du dispositif de sonde de mesure (16).

3. Système de mesure selon la revendication 2, caractérisé en ce que les capteurs des dispositifs de sonde (16, 17, 18 ; 10, 11, 12) sont du type à thermocouple.

4. Système de mesure selon la revendication 3, caractérisé en ce que les capteurs des dispositifs de sonde (16, 17, 18 ; 10, 11, 12) sont des soudures de thermocouple identiques, montées en opposition chacune avec sa voisine.

5. Système de mesure selon la revendication 4, caractérisé en ce qu'il comporte une ou plusieurs sondes de mesure alimentées par des circuits de prélèvement du type à efficacité d'échange thermique $(K_1)$ et des sondes correctrices, en nombre égal ou supérieur à deux, respectivement alimentées par des circuits de prélèvement, pour les unes, du type à efficacité d'échange thermique $(K_2)$ double de celle $(K_1)$ du circuit de prélèvement des sondes de mesure et, pour les autres, du type à efficacité d'échange thermique $(K_3)$ égale à celle $(K_1)$ du circuit de prélèvement des sondes de mesure, les soudures d'une même fonction, soit de mesure, soit de correction, étant associées en parallèle pour former un groupe, le système comportant au moins un tel groupe.

6. Système de mesure selon la revendication 5, caractérisé en ce que les soudures d'au moins deux fonctions adjacentes, en particulier correctrices, sont en nombre égal et associées en série-opposition pour former des séries de soudures adjacentes, lesdites séries de soudures adjacentes étant associées en parallèle.

**Claims**

1. System to measure a condition quantity (T) of a fluid, of the type comprising a measurement sensing device (16 ; 10) disposed at a distance from the fluid of which it is required to carry out the measurement and located in a bleed flow circuit, the said fluid being affected at the point of measurement, because of its transportation at a distance, by a certain error in the said condition quantity with respect to that of the said fluid of which it is required to make the measurement, and comprising furthermore two correcting sensing devices (17 ; 18 ; 12, 11), located in the said bleed circuit at different locations, and a first and a second calculating means (23 ; 24), characterised in this that one of the correcting sensing devices (13 ; 11) measures the said condition quantity substantially with the same error value as the measurement sensing device, the other (17 ; 12) measuring the condition quantity with a double error value ; and in this that the first calculating means (23) supplies the difference $\Delta T$ between the signals $(T_2, T_3)$ provided by the said correcting sensing devices (17 ; 18 ; 12, 11), and that the second calculating means (24) supplies the signal $T = T_1 - \Delta T$ where $T_1$ is the signal provided by the measurement sensing device (16 ; 10).

2. System for the measurement of the temperature of a gas according to claim 1, characterised in this that the said measurement sensing devices (16) and the correcting sensing device (17 ; 18) each comprise a temperature sensor disposed in a gas flow (100) bled from the gas to be measured (101) with the aid of non-adiabatic bleed means (8a, 8b, 8c, 9) and in this that the efficiency of thermal exchange (K2) of the bleed circuit of one of the correcting sensing devices (17) is double that (K1) of the bleed circuit of the measurement sensing device (16), whilst the exchange efficiency (K3) of the bleed circuit of the other correcting sensing device (18) is equal to that (K1) of the bleed circuit of the measurement sensing device (16).

3. Measurement system according to claim 2, characterised in this that the sensors of the sensing devices (16, 17, 18 ; 10, 11, 12) are of the thermocouple type.

4. Measurement system according to claim 3, characterised in this that the sensors of the measurement sensing devices (16, 17, 18 ; 10, 11, 12) are junctions of identical thermocouples, mounted each in opposition with its neighbour.

5. Measurement system according to claim 4, characterised in this that it comprises one or more measurement sensing devices supplied by bleed circuits of the type with a thermal exchange effectiveness ($K_1$) and correcting sensing devices, with a number equal to or in excess of two respectively supplied by bleed circuits, for the one, of the type with thermal effectiveness ($K_2$) double that of ($K_1$) of the bleed circuits of the measurement sensing devices and, for the others, of the type with a thermal exchange effectiveness ($K_3$) equal to that ($K_1$) of the bleed circuit of the measurement sensing devices, the junctions with a common function, either for measurement or corrections, being associated in parallel in order to form a group, the system comprising at least one such group.

6. Measurement system according to claim 5, characterised in this that the junction of at least two adjacent functions, in particular correction, are equal in number and associated in series opposition in order to form a series of adjacent junctions, the said series of adjacent junctions being associated in parallel.


**Patentansprüche**

1. System zum Messen einer Zustandsgröße (T) eines Fluidums, mit einer Meßsondenvorrichtung (16 ; 10) im Abstand von dem zu messenden Fluidum und angeordnet in einem Entnahme- und Strömungskreis, wobei das Fluidum infolge seines Transports über einige Entfernung mit einem gewissen Fehler der genannten Zustandsgröße gegenüber derjenigen des Fluidums behaftet ist, auf die sich die Messung beziehen soll, und außerdem mit zwei in dem genannten Entnahmekreis an unterschiedlichen Stellen angeordneten Korrektursondenvorrichtungen (17, 18 ; 12, 11) sowie einer ersten und einer zweiten Recheneinrichtung (23 ; 24), dadurch gekennzeichnet, daß die eine der Korrektursondenvorrichtungen (18 ; 11) die genannte Zustandsgröße im wesentlichen mit dem gleichen Fehlerwert mißt wie die Meßsondenvorrichtung, während die andere (17 ; 12) diese Zustandsgröße mit einem zweifachen Fehlerwert mißt, daß die erste Recheneinrichtung (23) die Differenz ΔT zwischen den Signalen ($T_2$, $T_3$) liefert, die von den Korrektursondenvorrichtungen (17, 18 ; 11, 12) abgegeben sind, und daß die zweite Recheneinrichtung (24) das Signal $T = T_1 - \Delta T$ liefert, worin $T_1$ das Signal darstellt, das von der Meßsondenvorrichtung (16 ; 10) abgegeben ist.

2. System zum Messen der Temperatur eines Gases, nach Anspruch 1, dadurch gekennzeichnet, daß die Meßsondenvorrichtung (16) und die Korrektursondenvorrichtungen (17, 18) jeweils einen Temperaturfühler aufweisen, der in einem Gastrom (100) angeordnet ist, der von dem zu messenden Gase (101) mit Hilfe einer nicht adiabatischen Entnahmeeinrichtung (8a, 8b, 8c, 9) abgezweigt ist, und daß der Wärmeaustauschfaktor (K2) des Entnahmekreises der einen Korrektursondenvorrichtung (17) zweimal so groß ist wie derjenige (K1) des Entnahmekreises der Meßsondenvorrichtung (16), während der Austauschfaktor (K3) des Entnahmekreises der anderen Korrektursondenvorrichtung (18) gleich demjenigen (K1) des Entnahmekreises der Meßsondenvorrichtung (16) ist.

3. Meßsystem nach Anspruch 2, dadurch gekennzeichnet, daß die Meßfühler der Sondenvorrichtungen (16, 17, 18 ; 10, 11, 12) als Thermoelemente ausgebildet sind.

4. Meßsystem nach Anspruch 3, dadurch gekennzeichnet, daß die Meßfühler der Sondenvorrichtungen (16, 17, 18 ; 10, 11, 12) übereinstimmende Thermoelement-Lötstellen sind, die der jeweils benachbarten entgegengeschaltet sind.

5. Meßsystem nach Anspruch 4, dadurch gekennzeichnet, daß eine oder mehrere Meßsonden vorgesehen sind, die von Entnahmekreisen des Typs mit dem Wärmeaustauschfaktor (K1) gespeist werden, sowie mindestens zwei Korrektursonden, von denen die einen von Entnahmekreisen des Typs mit einem Wärmeaustauschfaktor (K2), der den zweifachen Wert desjenigen (K1) des Entnahmekreises für die Meßsonden hat, gespeist werden, die anderen von Entnahmekreisen des Typs mit einem Wärmeaustauschfaktor (K3), dessen Wert gleich demjenigen (K1) des Entnahmekreises der Meßsonden ist, wobei die Lötstellen gleicher Zweckbestimmung, und zwar Meß-Lötstellen oder Korrektur-Lötstellen, parallel zur Bildung einer Gruppe zusammengeschaltet sind und das System mindestens eine solche Gruppe aufweist.

6. Meßsystem nach Anspruch 5, dadurch gekennzeichnet, daß gleich viele benachbarte Lötstellen mit mindestens zwei Zweckbestimmungen vorliegen und in Reihe gegeneinander geschaltet sind, um Folgen von benachbarten Lötstellen zu bilden, wobei die genannten Serien benachbarter Lötstellen einander parallel geschaltet sind.

Fig-1

Fig-2

Fig-3

$Tg$

$30_1$

$Tm_1$

$Tg$

$20_1$

$+$

$-$

$+$

$+$

$T_1$

16

24

$+$

$-$

$T$

$Tg$

$30_2$

$Tm_2$

$20_2$

$2\Delta T$

$+$

$-$

$+$

$+$

$T_2$

17

$+$

$-$

23

$\Delta T$

$Tg$

$30_3$

$Tm_3$

$20_3$

$\Delta T$

$+$

$-$

$+$

$+$

$T_3$

18

Fig_4

12

11

102

103

10

105

104

4-4a-5

Fig_5a

Fig-5b

4-4a-5

Fig-7

Fig-6